# EUROPEAN PATENT APPLICATION

(11) **EP 4 344 139 A1**
(43) Date of publication of application: **27.03.2024**
(21) Application number: 22870159.5
(22) Date of filing: 22.08.2022
(51) Int. Cl.: H04L 12/28, H04L 67/125, G06F 3/0484, G06F 1/16

(54) **WEARABLE ELECTRONIC DEVICE FOR CONTROLLING PLURALITY OF INTERNET-OF-THINGS DEVICES, OPERATION METHOD THEREOF, AND STORAGE MEDIUM**

(30) Priority: 15.09.2021 KR 20210123030
(71) Applicant: Samsung Electronics Co., Ltd., Suwon-si, Gyeonggi-do 16677 (KR)
(72) Inventor: BAE, Sunwook, Suwon-si Gyeonggi-do 16677 (KR); KANG, Heeju, Suwon-si Gyeonggi-do 16677 (KR); KIM, Hyunhwi, Suwon-si Gyeonggi-do 16677 (KR); WOO, Heejin, Suwon-si Gyeonggi-do 16677 (KR); CHO, Bermjin, Suwon-si Gyeonggi-do 16677 (KR); JO, Yongwoon, Suwon-si Gyeonggi-do 16677 (KR); CHO, Jaeyong, Suwon-si Gyeonggi-do 16677 (KR)
(74) Representative: Gulde & Partner
(86) International application number: PCT/KR2022/012548
(87) International publication number: WO 2023/043073

(57) **Abstract**

A wearable electronic device is provided. The wearable electronic device may comprise a housing formed to be wearable on the body, at least one sensor, a communication module, a display, and at least one processor operatively connected to the at least one sensor, the communication module, and the display, wherein the at least one processor is configured to: acquire state information related to a plurality of Internet-of things devices from an electronic device connected to the plurality of Internet-of things devices over wireless communication; acquire sensor data by using the at least one sensor; on the basis of the state information related to the plurality of Internet-of things devices and the sensor data, identify a candidate function providable by at least one Internet-of things device among the plurality of Internet-of things devices; and display, on the display, information on the candidate function providable by the at least one Internet-of-things device.

## Description

### [Technical Field]

The disclosure relates to a wearable electronic device for controlling multiple Internet of things (IoT) devices, a method for operating the same, and a storage medium. More particularly, the disclosure relates to a wearable electronic device, a method for operating the same, and a storage medium, wherein the wearable electronic device detects a user environment in advance, identifies an operating state regarding multiple external devices, and efficiently controls multiple IoT devices based on the identified operating state and the current user environment.

### [Background Art]

In line with development of wireless communication technologies, various things incorporate communication functions, thereby forming a network, such that things can be controlled conveniently. Such incorporation of communication functions in things, followed by network connection, is referred to as Internet of things (IoT), and is widely used in daily life. Through convergence and combination between existing IT technologies and various industries, such IoT may be applied to various fields, such as smart homes, smart buildings, smart cities, smart cars or connected cars, smart grids, health care, smart home appliances, or cutting-edge medical services.

In the case of a smart home environment, among the same, various kinds of IoT devices may be utilized to provide various services based on IoT. An electronic device (for example, a smartphone) may execute an application for managing each IoT device.

The above information is presented as background information only to assist with an understanding of the disclosure. No determination has been made, and no assertion is made, as to whether any of the above might be applicable as prior art with regard to the disclosure.

### [DETAILED DESCRIPTION OF THE INVENTION]

### [Technical Problem]

An electronic device, such as a smartphone, for example, may display various contents, such as icons or screens for executing applications for managing IoT devices. However, in the case of a wearable electronic device (for example, a smart watch) interworking with the electronic device, the small display size may make it difficult to manage the IoT devices through the applications.

Aspects of the disclosure are to address at least the above-mentioned problems and/or disadvantages and to provide at least the advantages described below. Accordingly, an aspect of the disclosure is to provide a wearable electronic device, a method for operating the same, and a storage medium, wherein the wearable electronic device detects a user environment in advance, identifies an operating state regarding multiple external devices, and efficiently controls multiple IoT devices based on the identified operating state and the current user environment.

Technical issues to be addressed by the disclosure are not limited to the above-mentioned technical problems, and other technical issues not mentioned herein will be clearly understood from the following description by those skilled in the art to which the disclosure pertains.

Additional aspects will be set forth in part in the description which follows and, in part, will be apparent from the description, or may be learned by practice of the presented embodiments.

### [Technical Solution]

In accordance with an aspect of the disclosure, a wearable electronic device is provided. The wearable electronic device includes a housing formed to be worn on a body, at least one sensor, a communication module, a display, and at least one processor operatively connected to the at least one sensor, the communication module, and the display, wherein the at least one processor is configured to obtain state information related to a plurality of IoT devices through the communication module from an electronic device connected to the plurality of IoT devices through wireless communication, obtain sensor data by using the at least one sensor, identify a candidate function providable by at least one IoT device among the plurality of IoT devices based on the sensor data and the state information related to the plurality of IoT devices, and display information on the candidate function providable by the at least one IoT device on the display.

In accordance with another aspect of the disclosure, a method for controlling a plurality of IoT devices in a wearable electronic device is provided. The method includes obtaining state information related to a plurality of IoT devices from an electronic device connected to the plurality of IoT devices through wireless communication, obtaining sensor data by using the at least one sensor, identifying a candidate function providable by at least one IoT device among the plurality of IoT devices based on the sensor data and the state information related to the plurality of IoT devices, and displaying information on the candidate function providable by the at least one IoT device.

In accordance with another aspect of the disclosure, a non-volatile storage medium storing instructions, wherein the instructions are configured to cause a wearable electronic device to perform at least one operation is provided. When executed by at least one processor of the wearable electronic device, the at least one operation includes obtaining state information related to a plurality of IoT devices from an electronic device connected to the plurality of IoT devices, obtaining sensor data by using the at least one sensor, identifying a candidate function providable by at least one IoT device among the plurality of IoT devices based on the sensor data and the state information related to the plurality of IoT devices, and displaying information on the candidate function providable by the at least one IoT device.

### [Advantageous Effects]

According to various embodiments of the disclosure, a wearable electronic device may detect a user environment in advance, may identify an operating state regarding multiple external devices, and may easily control multiple IoT devices based on the identified operating state and the current user environment in an efficient manner.

According to various embodiments of the disclosure, a customized user interface (UI) may be provided based on state information regarding multiple external devices and user-related sensor data collected by a wearable electronic device, and notification recommendation may be provided such that detailed control is possible, thereby providing the user with improved user experiences.

According to various embodiments of the disclosure, by extracting and providing a function providable by at least some of multiple external devices according to sensor data that reflects user situations, the user may control multiple external devices easily and efficiently even if the wearable electronic device has a limited display size.

Other aspects, advantages and salient features of the disclosure will become apparent to those skilled in the art from the following detailed description, which, taken in conjunction with the annexed drawings, discloses various embodiments of the disclosure.

### [BRIEF DESCRIPTION OF DRAWINGS]

The above and other aspects, features, and advantages of certain embodiments of the disclosure will be more apparent from the following description taken in conjunction with the accompanying drawings, in which:
FIG. 1 is a block diagram of an electronic device in a network environment according to an embodiment of the disclosure;
FIG. 2 is a diagram illustrating a system configuration in an Internet of things (IoT) environment according to an embodiment of the disclosure;
FIG. 3 is an internal block diagram of a wearable electronic device according to an embodiment of the disclosure;
FIG. 4 is a flowchart illustrating an operation in a wearable electronic device for controlling IoT devices according to an embodiment of the disclosure;
FIG. 5 is a signal flowchart schematically illustrating a procedure for controlling IoT devices in a wearable electronic device according to an embodiment of the disclosure;
FIG. 6 is a diagram schematically illustrating a user interface (UI) in an electronic device and a customized UI in a wearable electronic device according to an embodiment of the disclosure;
FIG. 7 is a diagram schematically illustrating a wearable electronic device related to control of IoT devices, and internal operation components in an electronic device according to an embodiment of the disclosure;
FIG. 8 is a signal flowchart schematically illustrating a procedure in which a wearable electronic device obtains information related to control of IoT devices from an electronic device according to an embodiment of the disclosure;
FIG. 9 is a diagram schematically illustrating a UI for registering a preferred IoT device in an electronic device and a customized UI in a wearable electronic device according to an embodiment of the disclosure;
FIG. 10 is a diagram schematically illustrating a customized UI related to a preferred IoT device in a wearable electronic device according to an embodiment of the disclosure;
FIG. 11 is a diagram schematically illustrating a customized UI when a location is changed in a wearable electronic device according to an embodiment of the disclosure;
FIG. 12 is a screen view based on sensor data and state information of a preferred IoT device in a wearable electronic device according to an embodiment of the disclosure;
FIG. 13 is a screen view based on a usage history of a preferred IoT device in a wearable electronic device according to an embodiment of the disclosure; and
FIG. 14 is a diagram for describing a communication protocol between a wearable electronic device and an electronic device according to an embodiment of the disclosure.

Throughout the drawings, it should be noted that like reference numbers are used to depict the same or similar elements, features, and structures.

### [MODE FOR CARRYING OUT THE INVENTION]

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

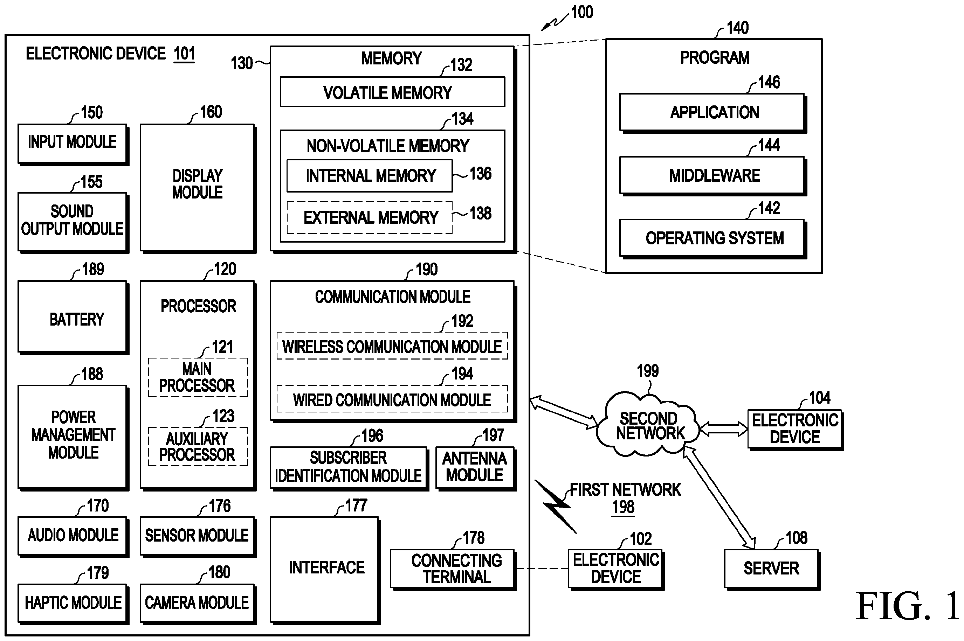

FIG. 1 is a block diagram illustrating an electronic device in a network environment according to an embodiment of the disclosure. Referring to FIG. 1, an electronic device 101 in a network environment 100 may communicate with an external electronic device 102 via a first network 198 (e.g., a short-range wireless communication network), or at least one of an external electronic device 104 or a server 108 via a second network 199 (e.g., a long-range wireless communication network). According to an embodiment of the disclosure, the electronic device 101 may communicate with the external electronic device 104 via the server 108. According to an embodiment of the disclosure, the electronic device 101 may include a processor 120, a memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments of the disclosure, at least one of the components (e.g., the connecting terminal 178) may be omitted from the electronic device 101, or one or more other components may be added in the electronic device 101. In some embodiments of the disclosure, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment of the disclosure, as at least part of the data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment of the disclosure, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., a sleep) state, or together with the main processor 121 while the main processor 121 is in an active (e.g., executing an application) state. According to an embodiment of the disclosure, the auxiliary processor 123 (e.g., an image signal processor or a communication processor) may be implemented as part of another component (e.g., the camera module 180 or the communication module 190) functionally related to the auxiliary processor 123. According to an embodiment of the disclosure, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence model is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment of the disclosure, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment of the disclosure, the display module 160 may include a touch sensor adapted to detect a touch, or a pressure sensor adapted to measure the intensity of force incurred by the touch.

The audio module 170 may convert a sound into an electrical signal and vice versa. According to an embodiment of the disclosure, the audio module 170 may obtain the sound via the input module 150, or output the sound via the sound output module 155 or an external electronic device (e.g., an external electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment of the disclosure, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the external electronic device 102) directly or wirelessly. According to an embodiment of the disclosure, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the external electronic device 102). According to an embodiment of the disclosure, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment of the disclosure, the haptic module 179 may include, for example, a motor, a piezoelectric element, or an electric stimulator.

The camera module 180 may capture a still image or moving images. According to an embodiment of the disclosure, the camera module 180 may include one or more lenses, image sensors, image signal processors, or flashes.

The power management module 188 may manage power supplied to the electronic device 101. According to one embodiment of the disclosure, the power management module 188 may be implemented as at least part of, for example, a power management integrated circuit (PMIC).

The battery 189 may supply power to at least one component of the electronic device 101. According to an embodiment of the disclosure, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the external electronic device 102, the external electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment of the disclosure, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the external electronic device 104), or a network system (e.g., the second network 199). According to an embodiment of the disclosure, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment of the disclosure, the antenna module 197 may include an antenna including a radiating element including a conductive material or a conductive pattern formed in or on a substrate (e.g., a printed circuit board (PCB)). According to an embodiment of the disclosure, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment of the disclosure, another component (e.g., a radio frequency integrated circuit (RFIC)) other than the radiating element may be additionally formed as part of the antenna module 197.

According to various embodiments of the disclosure, the antenna module 197 may form a mmWave antenna module. According to an embodiment of the disclosure, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment of the disclosure, commands or data may be transmitted or received between the electronic device 101 and the external electronic device 104 via the server 108 coupled with the second network 199. Each of the external electronic devices 102 or 104 may be a device of a same type as, or a different type, from the electronic device 101. According to an embodiment of the disclosure, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment of the disclosure, the external electronic device 104 may include an internet-of things (IoT) device. The server 108 may be an intelligent server using machine learning and/or a neural network. According to an embodiment of the disclosure, the external electronic device 104 or the server 108 may be included in the second network 199. The electronic device 101 may be applied to intelligent services (e.g., smart home, smart city, smart car, or healthcare) based on 5G communication technology or IoT-related technology.

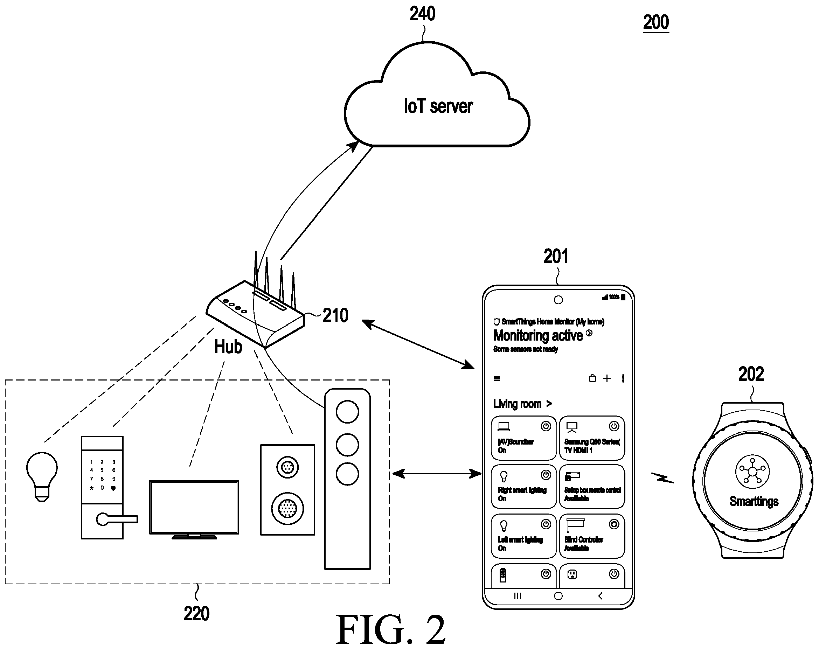

FIG. 2 is a diagram illustrating a system configuration in an IoT environment according to an embodiment of the disclosure. An electronic device 201 of FIG. 2 may be the electronic device 101 of FIG. 1.

Referring to FIG. 2, a system 200 in the IoT environment may include an electronic device 201, a wearable electronic device 202, a hub 210, a plurality of external devices 220, and/or an IoT server 240. According to an embodiment of the disclosure, the system 200 may further include servers, such as a cloud server and an application market server in addition to the IoT server 240.

According to various embodiments of the disclosure, the hub 210 may include a communicator, and may receive data from a plurality of external devices 220 through the communicator. The hub 210 may be referred to as a hub device, a control device, an access point (AP), a coordinator, or a server. According to an embodiment of the disclosure, the hub 210 may communicate with the plurality of external devices 220 and the electronic device 201 by using a first-typed communication or a second-typed communication. According to another embodiment of the disclosure, the hub 210 may communicate with the plurality of external devices 220 by using the first-typed communication and communicate with the electronic device 201 by using the second-typed communication. Here, the first-typed communication and the second-typed communication may be different from each other but may be the same, and when different from each other, power consumption of the first-typed communication may be relatively smaller than that of the second-typed communication. For example, Zigbee communication may be used for communication between the plurality of external devices 220 and the hub 210, and Wi-Fi communication may be used for communication between the electronic device 201 and the hub 210. In addition, the hub 210 may perform communication with at least some of the plurality of external devices 220 by using a third-typed communication rather than the first-typed communication. For example, for communication between at least some of the plurality of external devices 220 and the hub 210, Zigbee communication may be used, and for communication between other part of the plurality of external devices 220 and the hub 210, Z-Wave communication may be used. For example, in the case of the plurality of external devices 220 supporting Zigbee, communication with the hub 210 may be possible with low power, and in the case of the external devices 220 supporting Z-Wave, power efficiency may be higher than that of Zigbee.

For example, the hub 210 may collect data received from the plurality of external devices 220 in the house by using Zigbee or Z-Wave communication. The collected data may be transmitted to the electronic device 201 in the house or the server (e.g., IoT server 240) at a remote location. Here, the hub 210 may be configured as a separate device or may be embedded in an electronic device, such as a TV.

According to various embodiments of the disclosure, the plurality of external devices 220 may be located in various spaces within the house, and may be communicatively connected to the electronic device 201 through the hub 210. According to an embodiment of the disclosure, the plurality of external devices 220 may include various types of electronic devices or digital devices operating based on Internet of Things (IoT) technology, such as a smart home. For example, the plurality of external devices 220 may be referred to as Internet of Things devices or IoT devices.

As another example, at least some of the plurality of external devices 220 may include a sensor or a switch for detecting the surrounding environment. A device that cannot perform direct communication among the plurality of external devices 220 may be communicatively connected to the electronic device 201 through another external device connected to the electronic device 201. The plurality of external devices 220 according to the embodiments disclosed in the disclosure are not limited to the above-described types of devices, and may include all devices capable of communicating with the electronic device 201. The electronic device 201 may perform 1: N communication with the plurality of external devices 220.

According to an embodiment of the disclosure, the plurality of external devices 220 may operate by a user manipulation or may operate automatically in a case where a given condition is satisfied. For example, when an event occurs, the plurality of external devices 220 may output data (or a signal) to the hub 210 in response to the occurrence of the event. For example, the data may include device identification information (e.g., device ID), and the device-specific ID may be set when the device is manufactured. The plurality of external devices 220 may include a communication module, and may output the data to the hub 210 through the communication module. According to an embodiment of the disclosure, at least some of the plurality of external devices 220 may be connected to the Internet in which the IoT server 240 exists through a Wi-Fi connection mainly based on a Wi-Fi method.

For example, at least some of the plurality of external devices 220 may establish a connection with the electronic device 201 and receive information on the hub 210 to be directly connected through the established connection to access the hub 210, access the IoT server 240 through the hub 210, and maintain the connection with the IoT server 240.

According to various embodiments of the disclosure, the electronic device 201 is a device that manages a plurality of external devices 220, and may search for surrounding the plurality of external devices 220 and establish communication with each of the plurality of external devices 220. Accordingly, the electronic device 201 may receive data from the plurality of external devices 220 and display a screen for the plurality of external devices 220 in response to the received data. In an embodiment of the disclosure, the electronic device 201 may be a user device (e.g., a smartphone).

According to an embodiment of the disclosure, the electronic device 201 may display a user interface (UI) related to the executed application when an IoT-based application (hereinafter, IoT management app) for controlling the plurality of external devices 220 disposed in a plurality of places, for example, divided spaces of an indoor environment is executed. According to an embodiment of the disclosure, the electronic device 201 may manage external devices (e.g., lighting 1, refrigerator, TV 1, or Bluetooth speaker) of a first group disposed in the first space (e.g., user's home) and external devices (e.g., lighting 2, air conditioner, TV 2, or air purifier) of a second group disposed in the second space (e.g., user's office) by using the IoT management app.

According to various embodiments of the disclosure, the wearable electronic device 202 may be communicatively connected to the electronic device 201, and the wearable electronic device 202 may also install the IoT management app. In an embodiment of the disclosure, the wearable electronic device 202 may share state information on the plurality of external devices 220 managed by the electronic device 201. For example, the state information may include at least one of identification information of the plurality of external devices 220, the placement location (or place) of each of the plurality of external devices 220, context information, favorite (or preferred) list, group, device type, executable function information, authorization information, or control method.

According to various embodiments of the disclosure, the wearable electronic device 202 may receive all or part of state information on the plurality of external devices 220 from the electronic device 201. For example, the wearable electronic device 202 may receive state information on at least one external device registered as a preferred device group among the plurality of external devices 220 communicatively connected to the electronic device 201 from the electronic device 201. For example, the preferred device group (or favorite device group) may be a set of IoT devices for grouping external devices related to IoT and operating in a designated mode or scene. According to an embodiment of the disclosure, the preferred device group may define operation information related to a house, a company, a music listening mode or a scene, or a function, and may include a set of respective IoT devices (e.g., televisions (TVs), speakers, refrigerators, lights, or the like) for performing the operation information.

According to various embodiments of the disclosure, the wearable electronic device 202 may obtain sensor data by using at least one sensor. The wearable electronic device 202 may identify and display a candidate function that may be provided by at least one external device among the groups by using the sensor data and state information related to at least one external device registered in the preferred device group.

According to an embodiment of the disclosure, the sensor data may be used to identify a state of the wearable electronic device 202. For example, the wearable electronic device 202 may identify a state of the wearable electronic device 202 with respect to at least one of whether the wearable electronic device 202 is worn, a user state in which the wearable electronic device 202 is worn, or a surrounding environment of the user based on the sensor data.

According to an embodiment of the disclosure, the wearable electronic device 202 may display candidate functions of at least one external device controllable in response to the sensor data in a designated display method. For example, the wearable electronic device 202 may guide the available candidate functions to facilitate user selection by using text or graphic objects. As described above, candidate functions that may be provided in various visual ways may be displayed based on the display size of the wearable electronic device 202.

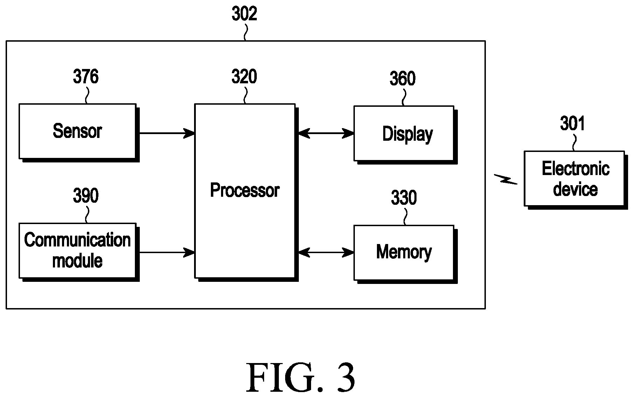

FIG. 3 is an internal block diagram of a wearable electronic device according to an embodiment of the disclosure.

Referring to FIG. 3, in an embodiment of the disclosure, the wearable electronic device 302 may include a processor 320, a memory 330, a display 360, a sensor 376, and a communication module 390.

According to various embodiments of the disclosure, the sensor 376 may operate substantially the same as the sensor module 176 of FIG. 1, and for example, may detect an operating state (e.g., a wearing state) of the wearable electronic device 302 or an external environmental state (e.g., a user state), and generate an electrical signal or data value corresponding to the detected state.

In an embodiment of the disclosure, the sensor 376 may include at least one sensor for detecting an operating state of the wearable electronic device 302, a user state wearing the wearable electronic device 302, and/or an environment surrounding the user.

In an embodiment of the disclosure, the sensor 376 may include an acceleration sensor or a gyro sensor that detects movement of the wearable electronic device 302, and may also include, for example, a biometric sensor that obtains a biometric signal related to a user state (e.g., exercise state and sleep state) wearing the wearable electronic device 302.

In an embodiment of the disclosure, the sensor 376 may include a biometric signal detector (not illustrated) and a biometric signal processor (not illustrated). In an embodiment of the disclosure, the biometric signal detector for detecting a photoplethysmogram (PPG) signal may include a light emitting unit and a light receiving unit. The light emitting unit may output light to the user's skin. However, the configuration included in the biometric signal detector for detecting the PPG signal is not limited to the light emitting unit and the light receiving unit. The configuration (e.g., a light emitting unit, a light receiving unit, and a biometric signal processor) of the sensor 376 for detecting the PPG signal may be referred to as a 'PPG sensor'.

In an embodiment of the disclosure, the biometric signal detector for detecting an electrocardiogram (ECG) signal may include a plurality of electrodes (e.g., 3 or more electrodes). The plurality of electrodes may receive biometric signals having different electrical physical quantities. The configuration (e.g., 3 or more electrodes and biometric signal processor) of the sensor 376 for detecting the ECG signal may be referred to as an 'ECG sensor'. For example, the sensor 376 may be implemented as one physical package including an ECG sensor and a PPG sensor.

In an embodiment of the disclosure, the sensor 376 may include, for example, a distance sensor or an illuminance sensor, and for example, may obtain sensor data related to the user's surrounding environment.

In an embodiment of the disclosure, the sensor 376 may include an air sensor. For example, sensor data including temperature information, humidity information, wind information, or air cleanliness information of the air sensor may be obtained.

The sensor 376 as described above represents only an example of a sensor for obtaining data related to a user wearing the wearable electronic device 302, and the type of the sensor may not be limited thereto.

According to various embodiments of the disclosure, the memory 330 may store a mapping table in which candidate functions supportable by at least one IoT device are mapped in response to sensor data and state information related to at least one IoT device. According to an embodiment of the disclosure, the wearable electronic device 302 may store a table associating supportable functions by states of wearable electronic device 302 identified based on sensor data, states of IoT devices, or combinations thereof in the memory 330, and may identify information on candidate functions of the IoT device that may be controlled by the wearable electronic device 302 from the table.

According to an embodiment of the disclosure, the wearable electronic device 302 may obtain information on the candidate functions of the IoT device controllable by the wearable electronic device 302 from the IoT server 240. For example, the wearable electronic device 302 may transmit state information of the wearable electronic device 302 based on sensor data to the IoT server 240, and may obtain information on at least one candidate function of the IoT device identified by the IoT server 240 based on the state information of the wearable electronic device 302 from the IoT server 240. According to an embodiment of the disclosure, the wearable electronic device 302 may directly identify a supportable candidate function of the IoT device by using state information of the wearable electronic device 302 based on sensor data instead of obtaining information on the candidate function from the IoT server 240. For example, the wearable electronic device 302 may store a mapping table used to directly identify a supportable candidate function of the IoT device in the memory 330.

According to an embodiment of the disclosure, the mapping table may be stored when the wearable electronic device 302 is manufactured or may be provided together when an Internet of Things-based application (hereinafter referred to as loT management app) is downloaded. According to another embodiment of the disclosure, the mapping table may be provided as the wearable electronic device 302 accesses the IoT server 240. For example, the IoT server may be a cloud server, and may be a server that operates an application (e.g., a Samsung SmartThings application) for managing a plurality of linked IoT devices.

Table 1 below illustrates an example of a mapping table managed by wearable electronic device 302.

**[Table 1]**

| State information on external devices (e.g., IoT devices) | Sensor data | Providable candidate functions |
|---|---|---|
| Light-on state | Sleep state | Light-off function |
| Air conditioning operating states (e.g., on/off, temperature), window state, ... | Exercise state | Air conditioner on function, air conditioner temperature control function, window opening function |
| Air purifier operating state (e.g., air quality) | In-room state | Air purifier on function |
| ... | ... | ... |

As described above, the wearable electronic device 302 may store candidate functions that may be provided by the IoT device based on the relationship between state information and sensor data. The wearable electronic device 302 may obtain the state information in Table 1 in various ways.

According to an embodiment of the disclosure, the wearable electronic device 302 may identify candidate functions that may be provided by the IoT device based on the obtained state information and sensor data in the wearable electronic device 302 by obtaining state information related to IoT devices from the electronic device 301 through a communication connection with the electronic device 301. According to another embodiment of the disclosure, the wearable electronic device 302 may obtain state information related to the IoT devices directly from the IoT device or the IoT server 240.

As another example, in addition to the mapping table, the memory 330 may store information for grouping IoT devices included in a preferred device group (or favorite device group) to operate in a designated mode or scene. As described above, the state information related to the IoT devices may not be limited to the example in Table 1, and for example, may further include, in addition to the operational states of the IoT devices, scene information in which the placement location of each of the IoT devices, identification information on the IoT devices, and/or information instructing at least some of the IoT devices to perform a specified function in response to sensor data are grouped, and the types thereof may vary.

According to various embodiments of the disclosure, the processor 320 may obtain information on a preferred device group registered by a user in the electronic device 301 upon communication connection with the electronic device 301 and store the information in the memory 330. According to an embodiment of the disclosure, the preferred device group may be registered in the electronic device 301 through a separate menu by the user for the wearable electronic device 302. According to another embodiment of the disclosure, the processor 320 may obtain information on some of the registered preferred device groups in the electronic device 301 and store the information in the memory 330. In this case, the preferred device group may be synchronized based on the user account.

According to various embodiment of the disclosure s, in a case where the IoT management app is executed under the control of the processor 320, the display 360 may display a user interface related to the executed IoT management app. According to an embodiment of the disclosure, the display 360 may display candidate functions that may be provided by at least one IoT device based on sensor data from the sensor 376 and state information related to the plurality of IoT devices provided from the electronic device (e.g., the electronic device 201 of FIG. 2) through the communication module 390.

According to various embodiments of the disclosure, the display 360 may simultaneously support input/output functions of data and may detect a touch. According to an embodiment of the disclosure, the display 360 may include a touch sensor.

According to various embodiments of the disclosure, the display 360 may display information on a candidate function that may be provided by at least one IoT device, receive a touch input for selecting the candidate function, and transmit the same to the processor 320. For example, a user may identify functions that may be provided by the IoT management app without executing the IoT management app, and may execute the IoT management app for detailed control of IoT devices according to a user input for selecting a candidate function. According to an embodiment of the disclosure, the information on the providable candidate function may include at least one of a name of a function that may be provided, a description of a function that may be provided, or a name of an IoT device performing a function that may be provided.

As described above, a customized UI may be provided based on user-related sensor data collected by the wearable electronic device 302 and state information on the plurality of IoT devices, and a notification recommendation may be provided. In addition, detailed control may be performed by executing an IoT management app for controlling IoT devices connected to the electronic device 301 according to a user input for selecting the same in response to the notification recommendation, thereby providing an improved user experience to the user.

According to various embodiments of the disclosure, the communication module 390 may communicate with the electronic device 301 under the control of the processor 320. According to an embodiment of the disclosure, the communication module 390 may perform communication by using at least one of communication methods including Zigbee, Z-Wave, Wi-Fi, Bluetooth, ultra-wide band (UWB), wireless USB, or near field communication (NFC). For example, the communication module 390 may be communicatively connected to the electronic device 301 through near field communication, such as Bluetooth or BLE. In a case where the user wearing the wearable electronic device 302 moves beyond the near field communication connectable radius of the electronic device 301, it may be difficult to find the IoT devices that may be connected through the electronic device 301. In this case, the communication module 390 may perform communication with the electronic device 301 based on a network communication method, such as long term evolution (LTE). For example, in a case where a user goes out with a personal IoT device (or IoT device) while wearing the wearable electronic device 302 while leaving the electronic device 301 at home, the personal IoT device may not be searched in the wearable electronic device 302 even if the wearable electronic device 302 and the personal IoT device are located directly adjacent to each other.

According to various embodiments of the disclosure, in a case where the electronic device 301 and the wearable electronic device 302 are not capable of near field communication under the control of the processor 320, the communication module 390 may perform a device to device (D2D) search operation for finding IoT devices directly around the wearable electronic device 302. For example, the wearable electronic device 302 may search for surrounding IoT devices and establish communication with at least some of the searched loT devices. According to an embodiment of the disclosure, the D2D search may be preferentially performed in the electronic device 301 rather than the wearable electronic device 302 considering the current consumption issue in the wearable electronic device 302.

According to various embodiments of the disclosure, the processor 320 may drive an application (e.g., IoT management app) managing at least a part of a plurality of IoT devices. The IoT management app may identify communication states with IoT devices through connection with the electronic device 301 or connection with IoT server 240 and output a user interface for controlling at least one IoT device. In an embodiment of the disclosure, the IoT management app may be downloaded through an application market server (e.g., App Store) and installed in the wearable electronic device 302 or the electronic device 301. According to an embodiment of the disclosure, the IoT management app may support a background service, and may obtain information on the Internet of Things devices registered by the user and information on the electronic device 301 from the IoT server 240 and store the information in the memory 330 when the application is executed.

According to various embodiments of the disclosure, the processor 320 may manage various IoT devices disposed in a plurality of places by using the IoT management app, substantially the same as in the electronic device 301. In this case, because the IoT management app provides a background service even when the IoT management app is not executed, a candidate function that may be provided by at least one of external devices connected to the electronic device 301 may be output (or displayed) in a notification form when a designated condition is satisfied.

For example, in a case where an event signal according to a change in the operating state of at least one IoT device belonging to the first group disposed in the first space (e.g., home) is received from the electronic device 301, the processor 320 may identify candidate functions that may be provided in relation to the state (e.g., exercise state, sleep state, wear state, ...) of the wearable electronic device 302 and notify the user thereof. Accordingly, the notification function for the candidate function may serve to induce the user to select a function of the IoT device controllable through the wearable electronic device 302. For example, the wearable electronic device 302 may display a list including objects representing candidate functions that may be provided by the IoT device. In this case, in response to a user input for selecting a specific object included in the list, the wearable electronic device 302 may display detailed information (e.g., a name of a function that may be provided, a description of a function that may be provided, or a name of an IoT device performing a function that may be provided) on a function that may be provided corresponding to the specific object through the display 360.

According to various embodiments of the disclosure, the processor 320 may transmit information related to the execution of the specific function to the electronic device 301 through the communication module 390 in response to obtaining the user selection for the candidate function. According to an embodiment of the disclosure, the information related to the execution of the specific function may correspond to a command for controlling the operation of the IoT device. In this case, even though the loT device has the same function, the form of the command for controlling the same may be different. For example, in the case of an IoT device, such as a TV, the command to turn on the power may be defined as '/sec/tv/power', and in the case of an IoT device, such as lighting, a command to turn on power may be defined as '/power/switch'. Accordingly, the processor 320 may generate a command for controlling the operation of the IoT device based on the metadata format commonly defined with the electronic device 301. For example, the processor 320 may transmit a command generated in a common format (or details), such as '/capability/power' to the electronic device 301. Accordingly, the electronic device 301 may convert the command into a format that may be supported by the IoT device when transmitting the command to the IoT device, and then transmit the command in the converted format. As described above, the wearable electronic device 302 generates a command based on a common format and transmits the command to the electronic device 301, thereby ensuring a processing speed in the wearable electronic device 302 by updating the format only in the electronic device 301 even if a supported format in the loT device is changed.

According to various embodiments of the disclosure, the wearable electronic device 302 may include a housing formed to be worn on a body, at least one sensor 376, a communication module 390, a display 360, and at least one processor 320 operatively connected to the at least one sensor 376, the communication module 390, and the display 360, and the at least one processor 320 may be configured to obtain state information related to a plurality of IoT devices from an electronic device 301 connected to the plurality of IoT devices through wireless communication, obtain sensor data by using the at least one sensor 376, identify a candidate function providable by at least one IoT device among the plurality of IoT devices based on the sensor data and the state information related to the plurality of IoT devices, and display information on the candidate function providable by the at least one IoT device on the display 360.

According to various embodiments of the disclosure, the at least one processor 320 may be configured to refer to a mapping table that maps providable functions corresponding to sensor data and state information of at least one IoT device, and identify a candidate function providable by the at least one IoT device based on the mapping table.

According to various embodiments of the disclosure, the at least one processor 320 may be configured to obtain state information related to the plurality of IoT devices registered in a preferred device group in the electronic device 301 when communicatively connecting with the electronic device 301 through the communication module 390.

According to various embodiments of the disclosure, the state information may include at least one of a placement location of each of the plurality of IoT devices, identification information for the plurality of IoT devices, or scene information in which information instructing at least some of the plurality of IoT devices to perform a designated function corresponding to sensor data is grouped.

According to various embodiments of the disclosure, the at least one processor 320 may be configured to identify a state of the wearable electronic device with respect to at least one of a wearing state of the wearable electronic device, a user state wearing the wearable electronic device, or a surrounding environment of the user, based on sensor data obtained by using the at least one sensor.

According to various embodiments of the disclosure, the at least one processor 320 may be configured to identify a candidate function providable by the at least one IoT device among the plurality of IoT devices based on a state of the wearable electronic device 302 and a usage history of the plurality of IoT devices.

According to various embodiments of the disclosure, the at least one processor 320 may be configured to receive a user input selecting a candidate function providable by the at least one IoT device displayed on the display, and transmit a command for controlling an operation of the at least one IoT device to the electronic device 301 through the communication module in response to the user input.

According to various embodiments of the disclosure, the at least one processor 320 may be configured to transmit a command for controlling an operation of the at least one IoT device through the communication module based on a metadata format commonly defined between the electronic device 301 and the wearable electronic device 302.

According to various embodiments of the disclosure, the at least one processor 320 may be configured to execute an IoT-based application for controlling the plurality of IoT devices connected to the electronic device 301 in response to the user input.

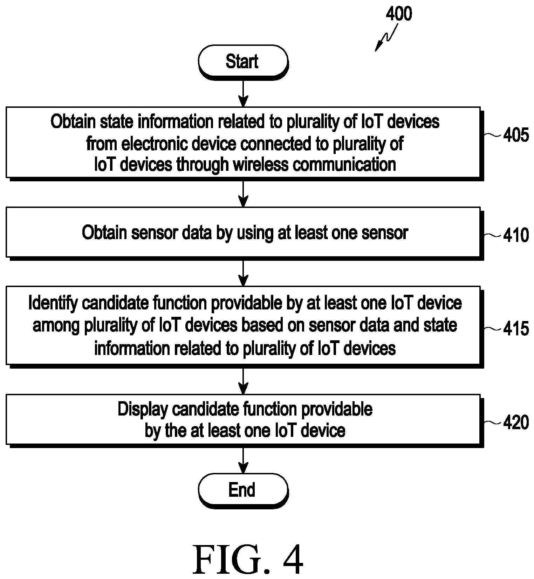

FIG. 4 is a flowchart 400 illustrating an operation in a wearable electronic device for controlling IoT devices according to an embodiment of the disclosure.

Referring to FIG. 4, the operating method may include operations 405 to 420. Each operation of the operating method of FIG. 4 may be performed by the wearable electronic device (e.g., at least one of the external electronic device 102 of FIG. 1, the wearable electronic device 202 of FIG. 2, the wearable electronic device 302 of FIG. 3, and the at least one processor (e.g., the processor 320 of FIG. 3) of the wearable electronic device). In an embodiment of the disclosure, at least one of operations 405 to 420 may be omitted, the order of some operations may be changed, or another operation may be added.

In operation 405, the wearable electronic device 302 may obtain state information related to a plurality of external devices 220 from electronic device 301 (e.g., the electronic device 201 of FIG. 2) connected to the plurality of IoT devices through wireless communication.

According to various embodiments of the disclosure, upon communication connection with the electronic device 301, the wearable electronic device 302 may obtain state information related to the plurality of external devices 220 registered in the preferred device group in the electronic device 301. According to an embodiment of the disclosure, the state information may include at least one of a placement location of each of the plurality of external devices 220, identification information for the plurality of external devices 220, or scene information in which information instructing at least some of the plurality of external devices 220 to perform a specified function in response to sensor data is grouped. Here, the scene refers to a division divided for easy access to the scenario, and may be referred to as an operation mode or a control mode. For example, a mode allowing at least a part of a plurality of external devices 220 to perform a specified function, such as a control mode (e.g., a rest mode, a sleep mode, ...) frequently used at home or a control mode (e.g., a work mode, a meeting mode, a tea time mode, ...) frequently used at an office, may be represented.

In operation 410, the wearable electronic device 302 may obtain sensor data by using at least one sensor 376.

In operation 415, the wearable electronic device 302 may identify candidate function that may be provided by at least one IoT device among the plurality of external devices 220 based on the sensor data and state information related to the plurality of external devices 220.

According to various embodiments of the disclosure, the wearable electronic device 302 may refer to a mapping table in which functions that may be provided corresponding to sensor data and state information of at least one IoT device are mapped, and may identify a candidate function that may be provided by the at least one IoT device based on the mapping table.

According to various embodiments of the disclosure, the wearable electronic device 302 may identify the state of the wearable electronic device 302 with respect to at least one of a wearing state of the wearable electronic device 302, a user state of the wearable electronic device 302, or a surrounding environment of the user based on sensor data obtained using the at least one sensor 376.

According to various embodiments of the disclosure, the wearable electronic device 302 may identify a candidate function that may be provided by at least one of the plurality of external devices 220 based on a state of the wearable electronic device 302 and a usage history of the plurality of external devices 220.

In operation 420, the wearable electronic device 302 may display information on candidate function that may be provided by the at least one IoT device.

According to various embodiments of the disclosure, the wearable electronic device 302 may receive a user input for selecting a candidate function that may be provided by the at least one IoT device displayed on the display 360 of the wearable electronic device. The wearable electronic device 302 may transmit a command for controlling the operation of the at least one IoT device to the electronic device 301 in response to the user input.

According to various embodiments of the disclosure, the wearable electronic device 302 may generate a command for controlling the operation of the at least one IoT device based on the metadata format commonly defined between the electronic device 301 and the wearable electronic device 302, and transmit the generated command to the electronic device 301. According to an embodiment of the disclosure, the electronic device 301 may convert the command into a format that may be supported by the IoT device, and then transmit the same to the IoT device through the IoT device or the hub 210. In this case, when the control object corresponding to the command is two or more IoT devices, the electronic device 301 may convert the command into a format that may be supported by each IoT device and transmit the same.

According to various embodiments of the disclosure, the wearable electronic device 302 may execute an IoT-based application for controlling the plurality of IoT devices connected to the electronic device 301 in response to the user input.

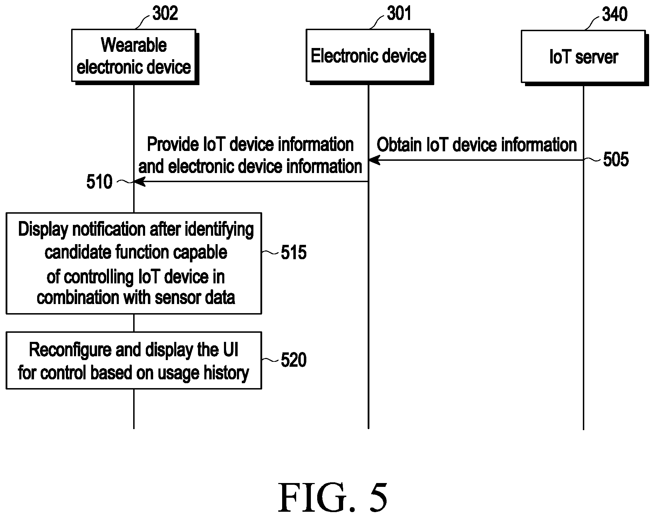

FIG. 5 is a signal flowchart schematically illustrating a procedure for controlling IoT devices in a wearable electronic device according to an embodiment of the disclosure.

Referring to FIG. 5, the electronic device 301 interworking with the wearable electronic device 302 after communication connection may obtain IoT device information from the IoT server 340 (e.g., IoT server 240 of FIG. 2) in operation 505. The electronic device 301 may provide information of the electronic device 301 together with IoT device information in operation 510. According to an embodiment of the disclosure, the IoT device information may include the current on/off state of the IoT device, the execution history of the IoT device, sensor information of IoT devices, controllable information by IoT devices. As another example, the information of the electronic device 301 may include information on the IoT device currently connected (or registered) to the electronic device 301, UI information configured in the electronic device 301 for controlling the IoT device, or network connection state information.

In operation 515, the wearable electronic device 302 may display a notification after identifying a candidate function capable of controlling the loT device in combination with sensor data. For example, the wearable electronic device 302 may identify a state of the wearable electronic device 302 with respect to at least one of whether the wearable electronic device 302 is worn, a user state in which the wearable electronic device 302 is worn, or a surrounding environment of the user based on the sensor data. By combining the IoT device information and the information on the electronic device 301 with the state information of the wearable electronic device 302, a controllable candidate function of the IoT device may be identified.

In operation 520, the wearable electronic device 302 may implement and display a control UI based on a usage history. According to an embodiment of the disclosure, the wearable electronic device 302 may refer to the usage history of the IoT device when identifying a controllable candidate function of the IoT device. For example, based on sensor data reflecting the user's situation and the usage history for the IoT device, the wearable electronic device may show the user the frequently used functions according to the small screen of the wearable electronic device 302 by increasing the priority, so that the user may efficiently and easily control the IoT devices.

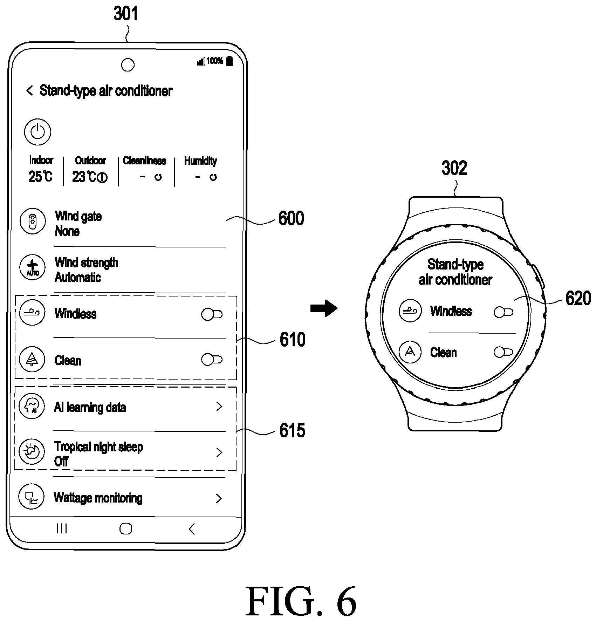

FIG. 6 is a diagram schematically illustrating a UI in an electronic device and a customized UI in a wearable electronic device according to an embodiment of the disclosure.

Referring to FIG. 6, the electronic device 301 may configure a specific function for an IoT device to be controlled according to a user input. According to various embodiments of the disclosure, the electronic device 301 may display the name (e.g., windless function, or clean function) and operating state (e.g., on/off state of a function) of a function that may be supported by the IoT device (e.g., air conditioner) on a display 600. For example, the electronic device 301 may configure a specific function for the loT device in response to a user input selecting an item (e.g., supportable functions) displayed on the display 600. In this case, on the large screen of the electronic device 301, all functions supportable by the IoT device may be displayed in a list form, but in the case of the wearable electronic device 302, some functions may be displayed due to the limitation of the screen size.

According to various embodiments of the disclosure, the electronic device 301 may distinguish items 610 frequently used by the user from items 615 infrequently used by the user, and then provide information related to items 610 frequently used when the wearable electronic device 302 executes the IoT management app. FIG. 6 exemplifies a case of providing items based on usage history for one IoT device, but may also be applied to a plurality of IoT devices connected to the electronic device 301. Accordingly, on a display 620 of the wearable electronic device 302, frequently used IoT devices and items supportable by the corresponding IoT devices may be preferentially displayed based on the usage history. For example, in the case of a plurality of IoT devices (e.g., air purifier, bedroom TV, living room TV, light 1, light 2, or light 3) connected to the electronic device 301, the electronic device 301 may expose supportable items (e.g., TV control in the living room or bundle control of lights 1 to 3) by at least some IoT devices based on the usage history among the plurality of IoT devices.

On the other hand, in the above description, a case in which a used IoT device based on a usage history and items supportable by the corresponding IoT device are preferentially displayed have been described as an example, but this is only an example and is not limited thereto. According to an embodiment of the disclosure, a controllable IoT device and supportable items may be displayed based on an operating state of at least one IoT device and sensor data of the wearable electronic device 302. According to another embodiment of the disclosure, the controllable IoT device and supportable items may be displayed based on not only the operating state of the at least one IoT device and the sensor data, but also a history (e.g., usage time) of using the at least one IoT device.

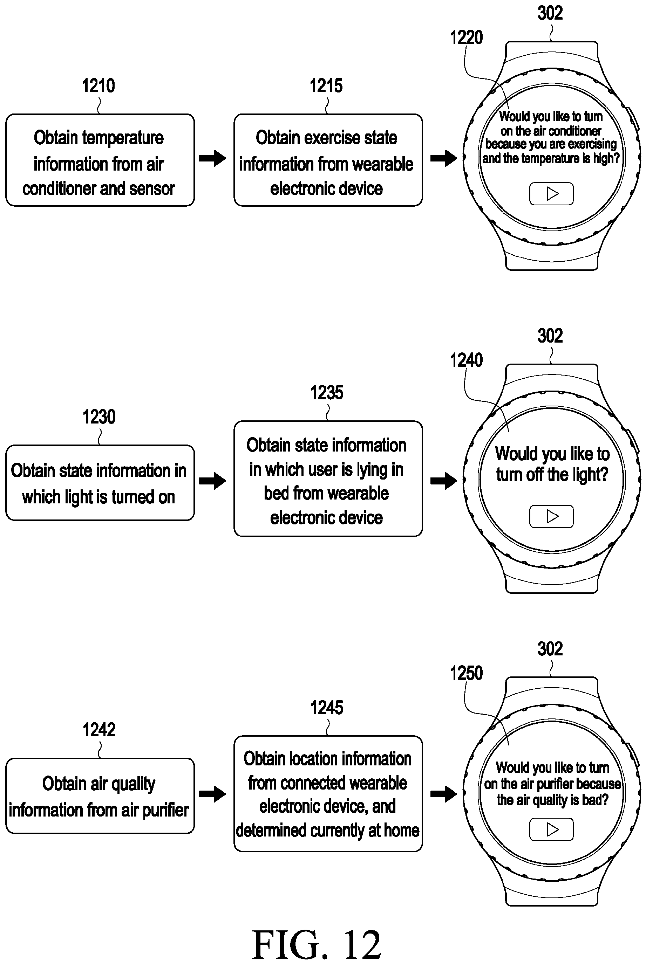

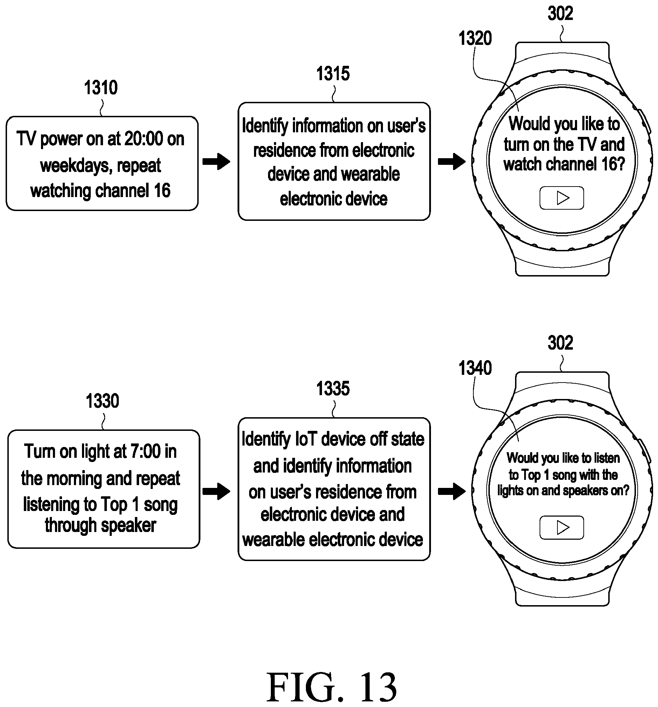

Descriptions related to the IoT device and supportable items displayed on the display of the wearable electronic device 302 will be described with reference to FIGS. 12 and 13.

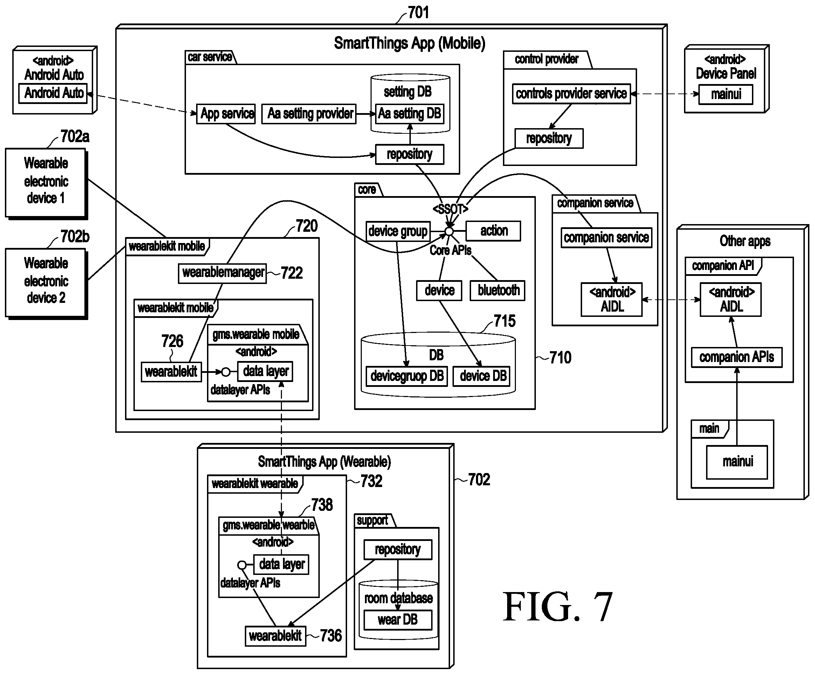

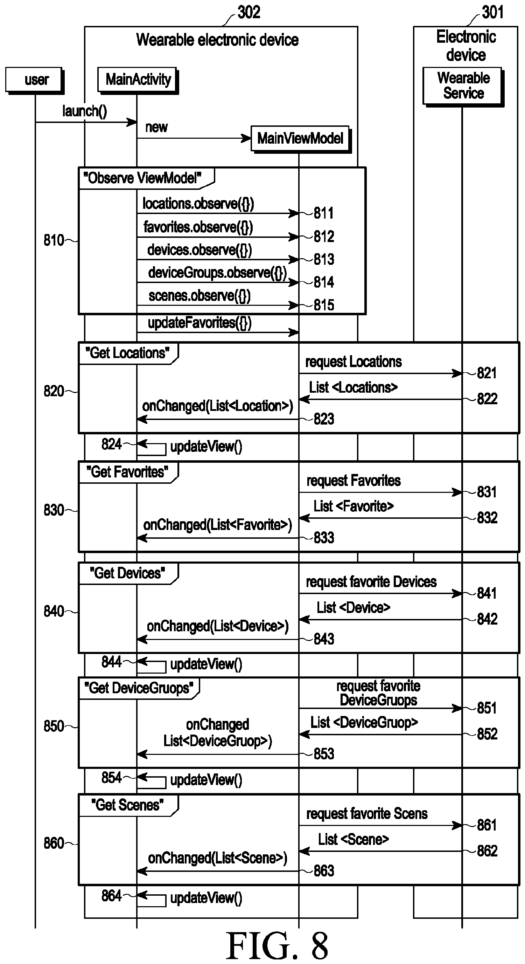

FIG. 7 is a diagram schematically illustrating a wearable electronic device related to control of IoT devices, and internal operation components in the electronic device according to an embodiment of the disclosure. A description of each operation component in FIG. 7 will be described with reference to FIG. 8. FIG. 8 is a signal flowchart schematically illustrating a procedure in which a wearable electronic device obtains information related to control of IoT devices from an electronic device according to an embodiment of the disclosure.

Referring to FIG. 7, components for controlling IoT devices according to various embodiments may largely include an IoT management app 702 (e.g., SmartThings) in the wearable electronic device 302 and an IoT management app 701 (e.g., SmartThings) in the electronic device 301.

The wearable electronic device 302 may transmit a request for controlling IoT devices to the electronic device 301 through a communication interface 732 (e.g., wearablekit wearable) based on a common library 736 (e.g., wearablekit), and receive the result. Likewise, the electronic device 301 may communicate with the wearable electronic device 302 through a communication interface 720 (e.g., wearablekit mobile) based on a common library 726 (e.g., wearablekit). In this case, the wearable electronic device 302 may exchange information with the electronic device 301 through a data layer 738 (datalayer).

According to various embodiments of the disclosure, a core module 710 in the electronic device 301 may manage a database 715 for each group or for each device in order to provide an IoT service, and may provide information for managing and controlling IoT devices in response to a request for information on IoT devices from the wearable electronic device 302 with reference to the database 715.

For example, if a state of at least one IoT device connected to the electronic device 301 and/or at least one state in relation to a scene is changed according to user input or satisfaction of specified conditions, an event may be transmitted to the IoT management app 702 (e.g., SmartThings) of the wearable electronic device 302 through the communication interface 720 (e.g., wearablekit mobile). According to an embodiment of the disclosure, because the electronic device 301 may interwork with a plurality of wearable electronic devices 702a and 702b including a wireless earphone as well as a smart watch through a wearable manager 722, the occurrence of the event may also be transmitted to the plurality of wearable electronic devices 702a and 702b.

FIG. 8 is a signal flowchart schematically illustrating a procedure in which a wearable electronic device obtains information related to control of IoT devices from an electronic device according to an embodiment of the disclosure. More specifically, FIG. 8 exemplifies a process in which the wearable electronic device 302 acquires information required in connection with the execution of the IoT management app with the electronic device 301.

Referring to FIG. 8, in response to a request for launching (or executing) the IoT management app by the user, the wearable electronic device 302 may execute the IoT management app.

According to various embodiments of the disclosure, in a case where the IoT management app is executed after the initial installation of the IoT management app, the wearable electronic device 302 may start initial installation (or initial configuration) of IoT devices through the electronic device 301 to be interworked. On the other hand, according to an embodiment of the disclosure, in a case where the IoT management app already installed on the wearable electronic device 302 is executed, information on IoT devices may be obtained from the electronic device 301 and the states of IoT devices may be modified and updated.

According to various embodiments of the disclosure, because the wearable electronic device 302 is configured and operated based on at least one IoT device disposed in a predetermined space in relation to execution of the IoT management app, the wearable electronic device 302 needs to identify which IoT devices are arranged in which place and the current operating state of each of the IoT devices.

Accordingly, the wearable electronic device 302 may collect information on IoT devices required to control at least one IoT device disposed in a predetermined space in relation to execution of the IoT management app. For example, the wearable electronic device 302 may generate (or provide) a command 810 designating information to be collected.

Referring to FIG. 8, the command 810 may refer to accessing other components in the wearable electronic device 302 through an application program interface (API) caller. According to an embodiment of the disclosure, the command 810 indicates the type of information to be obtained from the electronic device 301, and may include, for example, at least one of a location request command 811, a favorite request command 812, a device request command 813, a device group command 814, and a scene command 815.

According to an embodiment of the disclosure, in response to the location request command 811, a command (or calls) 820 (e.g., "Get Locations") for obtaining location information from the electronic device 301 to which the wearable electronic device 302 is communicatively connected may include an operation 821 of requesting locations and operations 822 and 823 of obtaining a list including location information. For example, the location information refers to divided spaces (or places) of an indoor environment, and the list including the location information may include various spaces (e.g., living room, kitchen, hallway, room) in the house as well as offices and homes. For example, the list including the location information may include locations registered in the IoT management app of the electronic device 301. Moreover, the wearable electronic device 302 updates view in operation 824.

According to an embodiment of the disclosure, in response to the favorite request command 812, the command (or call) (e.g., "Get Favorites") 830 for the wearable electronic device 302 to obtain favorite-related information from the electronic device 301 may include an operation 831 of requesting favorite-related information and operations 832 and 833 of obtaining a list including favorite-related information. For example, the list including favorite-related information may include whether IoT devices to be preferentially controlled among a plurality of IoT devices connected to the electronic device 301 are registered as preferred target devices. For example, it may correspond to an operation of identifying whether there is a favorite list registered in the IoT management app of the electronic device 301.

According to an embodiment of the disclosure, in response to the device request command 813, the command (or call) (e.g., "Get Devices") 840 for the wearable electronic device 302 to obtain information on at least one device registered as a preferred target device from the electronic device 301 may include an operation 841 of requesting information on the preferred target devices and operations 842 and 843 of obtaining a list including information on the preferred target devices. For example, the list including information on the preferred target devices may be a preferred device group (or a favorite device group). Moreover, the wearable electronic device 302 updates view in operation 844.

According to an embodiment of the disclosure, in response to the device group command 814, the command (or call) (e.g., "Get DevicesGroups") 850 for the wearable electronic device 302 to obtain information on a group registered as a device to be collectively controlled by the electronic device 301 may include an operation 851 of requesting information on the devices of the batch control group and operations 852 and 853 of obtaining a list including information on the devices of the batch control group. For example, a plurality of surveillance cameras or a plurality of lights may be arranged in a divided space in the house, and the list including information on the devices of the batch control group may include a batch controllable surveillance camera group or a light group. Moreover, the wearable electronic device 302 updates view in operation 854.

According to an embodiment of the disclosure, the preferred device group registered in the electronic device 301 and the preferred device group obtained by the wearable electronic device 302 from the electronic device 301 may be the same or different from each other. For example, when there are a plurality of preferred target devices registered in the preferred device group, the preferred target devices in the wearable electronic device 302 may be separately managed because the number of preferred target devices that may be displayed on the wearable electronic device 302 is limited.

According to an embodiment of the disclosure, in the electronic device 301, a preferred device group (or favorite target list) that may be displayed in the wearable electronic device 302 may be configured differently from the preferred device group in the electronic device 301. For example, the electronic device 301 may provide a user interface (UI) for registering a preferred device group in the wearable electronic device 302 according to a user input.

According to another embodiment of the disclosure, the wearable electronic device 302 may provide a user interface for registering at least a desired part of the preferred device group in the electronic device 301 according to a user input. For example, the user may directly select and register target devices to be displayed on the wearable electronic device 302 from the preferred device target list in the electronic device 301 through a menu (or item) provided by the wearable electronic device 302.

According to another embodiment of the disclosure, because the wearable electronic device 302 may be synchronized with the IoT 340 as well as the electronic device 301 at any time based on the service account registered in the wearable electronic device 302, the preferred device group registered based on a user account may be maintained.

According to an embodiment of the disclosure, in response to the scene command 815, the command (or call) (e.g., "Get Scenes") 860 for the wearable electronic device 302 to obtain information on the scene from the electronic device 301 may include an operation 861 of requesting information on the favorite scene and the operations 862 and 863 of obtaining a list including information on the scene. Moreover, the wearable electronic device 302 updates view in operation 864.

On the other hand, FIG. 8 illustrates a case where the wearable electronic device 302 obtains information corresponding to the command by transmitting each command (or calls) 820, 830, 840, 850, and 860 to the electronic device 301, but may be implemented to obtain desired information through one command transmission, and thus a method of obtaining information on IoT devices may not be limited thereto. According to an embodiment of the disclosure, the wearable electronic device 302 may obtain all information corresponding to the batch command from the electronic device 301 in a response form with one batch command (e.g., Get AllInformation). According to an embodiment of the disclosure, the batch command may be for obtaining information on IoT devices managed by the electronic device 301 at once.

On the other hand, FIG. 8 illustrates a case where the wearable electronic device 302 obtains information on the IoT device from the electronic device 301 by using a command (or a call), but an event may be received every time the state of the information on the IoT device in the electronic device 301 is changed. For example, while the wearable electronic device 302 is communicatively connected to the electronic device 301, a generated event may be received from the electronic device 301 when the operating state of at least one IoT device registered in the preferred device group is changed or a scene is changed. According to an embodiment of the disclosure, the wearable electronic device 302 may display a notification for notifying a user of a state change in response to the occurrence of the event. Accordingly, in a case where the IoT management app is not executed, the user may execute the IoT management app in the wearable electronic device 302 by recognizing the notification. In addition, in a case where the IoT management app is running, the user may select a desired operation in response to the notification through a notification displayed on wearable electronic device 302.

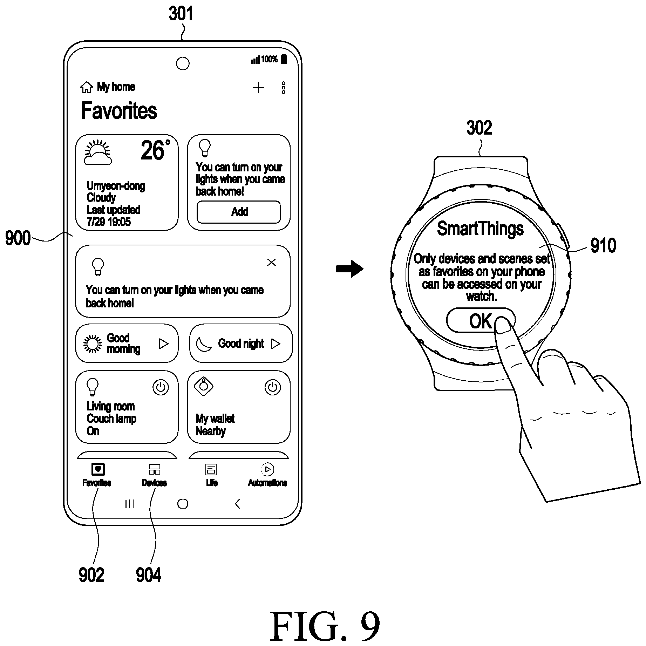

FIG. 9 is a diagram schematically illustrating a UI for registering a preferred IoT device in an electronic device and a customized UI in a wearable electronic device according to an embodiment of the disclosure.

FIG. 9 exemplifies a landing screen (or a page) when executing an IoT-based application (e.g., IoT management application) in each of the electronic device 301 and the wearable electronic device 302 according to an embodiment of the disclosure. According to an embodiment of the disclosure, the landing screen may correspond to a screen after initial configuration.

Referring to FIG. 9, a landing screen 900 of the electronic device 301 may include a favorite (or preferred) page including recommended items. According to an embodiment of the disclosure, the favorite page may be a home screen or a first page of the landing screen 900. For example, these recommended items may be configured as icons or buttons consisting of titles, images, text, photos, or a combination thereof in relation to IoT-based environments. For example, shortcut items related to IoT devices frequently controlled by the user may be displayed on the favorite page. According to an embodiment of the disclosure, at least a portion of the first page of the landing screen 900 may include a 'Favorites' tab 902 or a 'Devices' tab 904 that a user may designate as a favorite.

In response to a user selection on the 'Devices' tab 904 of FIG. 9, the electronic device 301 may switch to a screen for controlling IoT devices for each location (or space) and display the screen. For example, the electronic device 301 may display a screen including a plurality of pages in response to a user selection on the 'Devices' tab 904 of FIG. 9.

For example, a plurality of IoT devices, including a hub (e.g., the hub 210 of FIG. 2) may be displayed in an allocated state in any one space (e.g., an office). In this case, various elements related to each IoT device may be displayed on the page. For example, information capable of identifying each IoT device and state information of each IoT device may be displayed on the landing page by using an object. Such a landing page may serve to guide which IoT devices are in which states (e.g., on state, off state, open state, closed state, connected state, or disconnected state).

On the other hand, the wearable electronic device 302 may receive and synchronize information related to the IoT device registered through the 'Favorites' tab 902 of the electronic device 301 from the electronic device 301. For example, as illustrated in FIG. 9, on the landing screen 910 of the wearable electronic device 302 during synchronization, content guiding that IoT devices in the electronic device 301 and corresponding IoT devices may be grouped to access the favorite to operate in a specified scene may be displayed.

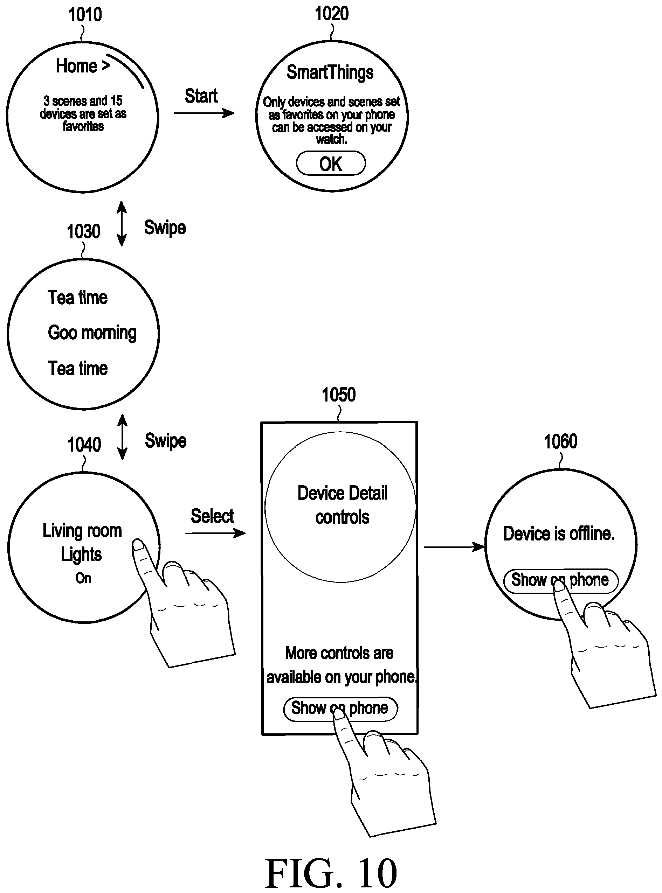

FIG. 10 is a diagram schematically illustrating a customized UI related to a preferred IoT device in a wearable electronic device according to an embodiment of the disclosure.

According to an embodiment of the disclosure, an authentication operation for the user and/or the wearable electronic device 302 may be required when executing the IoT management app. For example, content guiding the user to log in for authentication may be displayed on the screen. On the other hand, if login information (or authentication information) related to the user is already registered in the IoT management app, authentication of the user and/or the wearable electronic device 302 may be performed by using the registered login information, and if there is no registered login information, a new account registration may be guided.

Referring to FIG. 10, a first screen 1010 exemplifies a user interface (UI) for synchronizing information on a preferred IoT device and a scene registered through a preference menu in the electronic device 301 with the wearable electronic device 302. A second screen 1020 may be a launcher screen of an IoT management app if there is a service account registered in wearable electronic device 302. If there is no account registered in the wearable electronic device 302, a screen for logging in to the service account may be displayed. Here, the service account is a concept including user authentication in which login is performed based on an ID and password, and for example, the service account may be implemented as an account, such as Samsung Account^{™}. For example, a movement between screens 1030 and 1040 related to the control of IoT devices on a small screen may be performed through a swipe operation. For example, in a case where the user selects any one place, screens 1050 and 1060 including a scene selectable at the selected place and information on IoT devices registered in the preferred device group may be displayed.

For example, the wearable electronic device 302 may obtain the same data as data in the electronic device 301 registered in the service account from the electronic device 301 by logging into the registered service account. For example, the data in the electronic device 301 may be data capable of controlling IoT devices communicatively connected by the wearable electronic device 302. As another example, the wearable electronic device 302 may be synchronized with the electronic device 301 through the service account, thereby obtaining information on a preferred device group registered in the electronic device 301. Alternatively, the wearable electronic device 302 may obtain data capable of controlling IoT devices communicatively connected to the electronic device 301 from the IoT server 340.

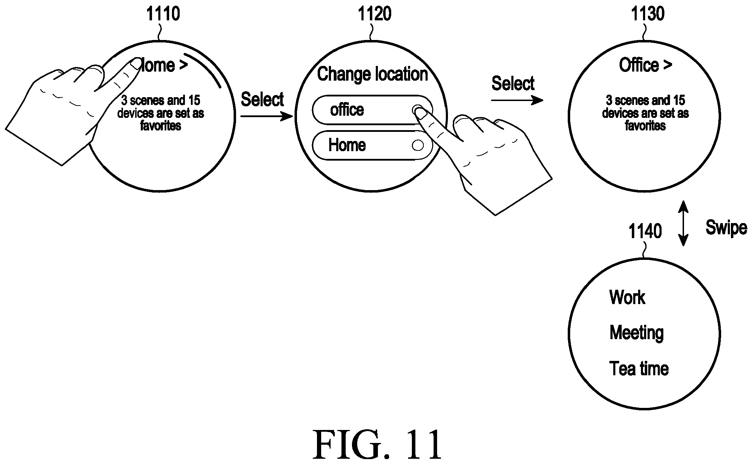

FIG. 11 is a diagram schematically illustrating a customized UI when a location is changed in a wearable electronic device according to an embodiment of the disclosure.

Referring to FIG. 11, the wearable electronic device 302 may execute 1010 an IoT management app and may select 1120 a desired place (e.g., user's office or home) through the IoT management app. For example, in a case where the user selects any one place, as illustrated in FIG. 11, a screen 1130 including a scene selectable at the selected place and information on IoT devices registered in the preferred device group may be displayed. For example, a movement between screens related to the control of IoT devices on a small screen may be performed through a swipe operation. For example, a screen 1140 including a designated scene (e.g., work, meeting, or tea time) may be displayed through a swipe operation. For example, the preferred device group (or favorite device group) may be a set of IoT devices for grouping external devices related to IoT and operating in a designated mode or scene. According to an embodiment of the disclosure, the preferred device group defines operation information related to a scene (e.g., work, meeting, or tea time) designated in relation to a company, and may include a set of respective IoT devices (e.g., TV, speaker, refrigerator, light, ...) for performing the corresponding operation information.

FIG. 12 is a screen view based on sensor data and state information of a preferred IoT device in a wearable electronic device according to an embodiment of the disclosure.

According to various embodiments of the disclosure, the wearable electronic device 302 may display a recommended screen including an object corresponding to a specific function on the display 360 based on sensor data and state information of the preferred IoT device.

Referring to FIG. 12, for example, the wearable electronic device 302 may obtain 1210 state information on a plurality of IoT devices, for example, temperature information from an air conditioner and a sensor device (e.g., temperature sensor or humidity sensor). According to an embodiment of the disclosure, the wearable electronic device 302 may receive state information on a plurality of IoT devices from the communicatively connected electronic device 301. According to another embodiment of the disclosure, the wearable electronic device 302 may connect not only to the electronic device 301 but also to the connected IoT server 340, other nearby devices, or Internet of Things devices in order to directly collect state information on a plurality of IoT devices. For example, the wearable electronic device 302 may obtain state information from at least a part of the pre-registered IoT devices or may obtain state information from the hub 210 to which the IoT devices are connected.

On the other hand, the wearable electronic device 302 may obtain 1215 exercise state information, which is state information of the wearable electronic device 302, based on sensor data, for example, based on a biometric signal of a user wearing the wearable electronic device 302. According to an embodiment of the disclosure, the wearable electronic device 302 may obtain 1215 the exercise state information after obtaining the temperature information. Alternatively, after recognizing that the user is in an exercise state based on the biometric signal, the wearable electronic device 302 may obtain temperature information as a recommended function to be performed by IoT devices. Accordingly, the wearable electronic device 302 may display a recommended screen 1220 including an object corresponding to a specific function of the air conditioner based on the temperature information and the exercise state information. According to an embodiment of the disclosure, the recommended screen 1220 corresponding to the specific function may include at least one of an object for executing the function, a name of the function, main state information of the function, a name indicating an IoT device performing the function, or an indicator. For example, the user may control the IoT device (e.g., an air conditioner) corresponding to the function by manipulating the object (e.g., a run button) for executing the function (e.g., an air conditioner on function).

In addition, for example, the wearable electronic device 302 may obtain 1230 state information on a plurality of IoT devices, for example, state information turned on from a light. In addition, the wearable electronic device 302 may obtain 1235, for example, information on a state in which a user wearing the wearable electronic device 302 lies on a bed based on the sensor data, for example, based on a biometric signal of a user wearing the wearable electronic device 302. Accordingly, the wearable electronic device 302 may display a recommended screen 1240 including an object corresponding to a specific function (e.g., lights off) of the light based on the state information on the light and the lying state information.

In addition, for example, the wearable electronic device 302 may obtain 1242 state information on a plurality of IoT devices, for example, air quality information from the air purifier. In addition, the wearable electronic device 302 may obtain, for example, information on the surrounding environment of the user of the wearable electronic device 302 based on the sensor data. In this case, the wearable electronic device 302 may obtain location information by itself by using a global position system (GPS) or may obtain 1245 location information from the connected electronic device 301. Accordingly, the wearable electronic device 302 may recognize that the current user has entered the house by using the surrounding environment information and the location information. Accordingly, the wearable electronic device 302 may display a recommended screen 1250 including an object corresponding to a specific function (e.g., air purifier on) of the air purifier based on the air quality information and the information on user's residence.

According to an embodiment of the disclosure, the wearable electronic device 302 may obtain, for example, state information on the Internet of Things device such as the temperature information, state information on which the light is turned on, or air quality information from the electronic device 301. According to another embodiment of the disclosure, the wearable electronic device 302 may obtain state information on the IoT device through the IoT server 340. For example, the electronic device 301 may register the IoT device and the function (e.g., thermometer/hygrometer function, light function, or air purifier function) of the corresponding IoT device in the IoT server 340, and the wearable electronic device 302 may obtain state information on the IoT device by accessing the IoT server 340.

According to various embodiments of the disclosure, by extracting and providing functions that may be provided by at least some of a plurality of IoT devices according to sensor data reflecting a user situation, an enhanced user experience may be provided to the user through a customized UI even if the display size of the wearable electronic device is limited.

FIG. 13 is a screen view based on a usage history of a preferred IoT device in a wearable electronic device according to an embodiment of the disclosure.

Referring to FIG. 13, the wearable electronic device 302 may obtain usage history information on the IoT device, such as watching TV history information 1310, from the electronic device 301. In this case, the wearable electronic device 302 may obtain the usage history information through the IoT server 340. In addition, the wearable electronic device 302 may identify 1315 information on the user's residence by using the user's surrounding environment information based on sensor data and location information from the electronic device 301. Accordingly, the wearable electronic device 302 may display a recommended screen 1320 including an object corresponding to a specific function (e.g., channel 16 is on) of the TV based on the air quality information and the information on the user's residence.

In addition, for example, the wearable electronic device 302 may identify the usage history information 1330 for the light and speaker and the corresponding IoT device off state 1335 based on usage history information and state information on the IoT device obtained from the electronic device 301 or the IoT server 340. In addition, the wearable electronic device 302 may identify the information on the user's residence 1335 by using the user's surrounding environment information based on sensor data and location information from the electronic device 301. Accordingly, the wearable electronic device 302 may display a recommended screen 1340 including an object for controlling a specific function (e.g., light on) of the light and a specific function (e.g., speaker on and play recommended songs) of the speaker when the time arrives based on the usage history information.

According to various embodiments of the disclosure, based on the sensor data reflecting the user's situation and the usage history of the IoT device, it is possible to show the user frequently used functions to fit the small screen of the wearable electronic device 302 to the user by increasing priority, so that the user control IoT devices efficiently and easily.

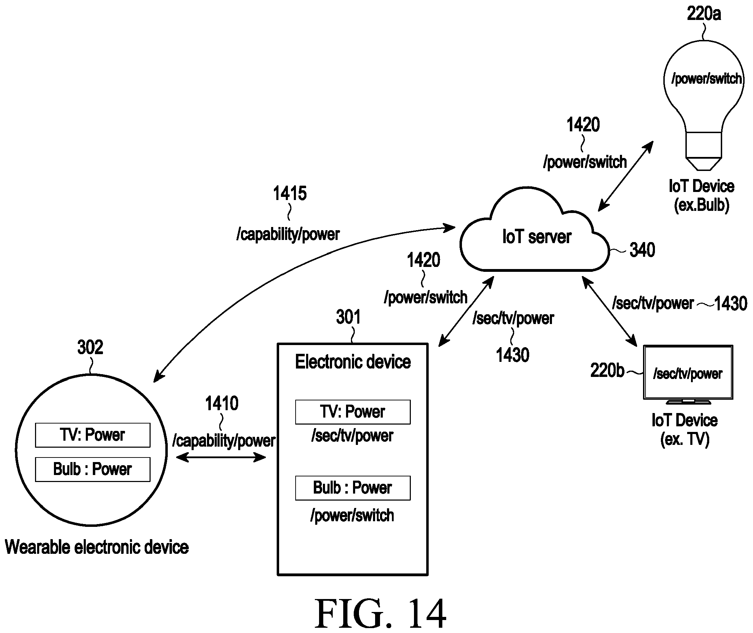

FIG. 14 is a diagram for describing a communication protocol between a wearable electronic device and an electronic device according to an embodiment of the disclosure.

Referring to FIG. 14, functions are defined in a resource form for each IoT device 220a and 220b, and resources for executing a specific function may be different from each other. For example, in the case of the TV 220b, the command to turn on the power may be defined as '/sec/tv/power', and in the case of the lighting 220a, the command to turn on the power is defined as '/power/switch'.

According to an embodiment of the disclosure, the information (or resource) related to the execution of the specific function may correspond to a command for controlling the operation of the IoT device. In this case, even if the IoT device has the same function, the form of a command for controlling the same may be different. Accordingly, the wearable electronic device 302 may generate a command for controlling the operation of the IoT device based on the metadata format commonly defined with the electronic device 301. For example, the wearable electronic device 302 may transmit 1410 a command generated in a common format (or details), such as '/capability/power' to the electronic device 301 to power on the lighting 220a and the TV 220b, respectively. As another example, the wearable electronic device 302 may transmit a command 1415 of the same type as the command transmitted to the electronic device 301 to the IoT server 340 without passing through the electronic device 301. In this case, the IoT server 340 may have a metadata format for command compatibility with the wearable electronic device 302.

In response to the reception of the command, the electronic device 301 may have a format supportable by each IoT device in advance in order to transmit the command to each of the lighting 220a and the TV 220b. Accordingly, the electronic device 301 may convert the command into a format supported by each of the lighting 220a and the TV 220b, and then transmit the commands 1420 and 1430 in the converted format through the IoT server 340, respectively. In this case, the electronic device 301 may directly transmit each command to the lighting 220a and the TV 220b. As described above, the wearable electronic device 302 generates a command based on a common format and transmits the command to the electronic device 301, so that the format may be updated only in the electronic device 301 even if a supported format in the loT device is changed later.

According to an embodiment of the disclosure, the update (or synchronization) of the common metadata format between the wearable electronic device 302 and the electronic device 301 may be performed when the version of the IoT management app is identified. According to an embodiment of the disclosure, the version information described in each of the IoT management app installed in the wearable electronic device 302 and the IoT management app installed in the electronic device 301 may be synchronized by mutually checking the communication connection. For example, whether the IoT management app needs to be updated may be determined based on the version of the common library (e.g., wearablekit) 736. For example, in a case where the IoT management app version in the wearable electronic device 302 is 3.2.1 and the IoT management app version in the electronic device 301 is 2.5.4, the update of the IoT management app in the electronic device 301 may be performed. If it is necessary to update the IoT management app in the wearable electronic device 302, the wearable electronic device 302 may request an update from the electronic device 301 or the wearable electronic device 302 may perform the update by directly accessing the IoT server 340 when necessary. Accordingly, in the wearable electronic device 302, even if the display size of the wearable electronic device is limited as in the electronic device 301, the user may efficiently and easily control IoT devices.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment of the disclosure, the module may be implemented in a form of an application-specific integrated circuit (ASIC).

Various embodiments as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment of the disclosure, a method according to various embodiments of the disclosure may be included and provided in a computer program product. The computer program product may be traded as a product between a seller and a buyer. The computer program product may be distributed in the form of a machine-readable storage medium (e.g., a compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments of the disclosure, each component (e.g., a module or a program) of the above-described components may include a single entity or multiple entities, and some of the multiple entities may be separately disposed in different components. According to various embodiments of the disclosure, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments of the disclosure, operations performed by the module, the program, or another component may be carried out sequentially, in parallel, repeatedly, or heuristically, or one or more of the operations may be executed in a different order or omitted, or one or more other operations may be added.

According to various embodiments of the disclosure, in a non-volatile storage medium storing instructions, wherein the instructions are configured to cause a wearable electronic device to perform at least one operation, when executed by at least one processor of the wearable electronic device , and the at least one operation may include obtaining state information related to a plurality of IoT devices from an electronic device connected to the plurality of IoT devices, obtaining sensor data by using the at least one sensor, identifying a candidate function providable by at least one IoT device among the plurality of IoT devices based on the sensor data and the state information related to the plurality of IoT devices, and displaying information on the candidate function providable by the at least one IoT device.

While the disclosure has been shown and described with reference to various embodiments thereof, it will be understood by those skilled in the art that various changes in form and details may be made therein without departing from the spirit and scope of the disclosure as defined by the appended claims and their equivalents.

## Claims

1. A wearable electronic device comprising:
a housing formed to be worn on a body;
at least one sensor;
a communication module;
a display; and
at least one processor operatively connected to the at least one sensor, the communication module, and the display,
wherein the at least one processor is configured to:
obtain state information related to a plurality of Internet of things (IoT) devices through the communication module from an electronic device which is connected to the plurality of IoT devices through wireless communication,
obtain sensor data by using the at least one sensor,
identify a candidate function providable by at least one IoT device among the plurality of IoT devices based on the sensor data and the state information related to the plurality of IoT devices, and
display information on the candidate function providable by the at least one IoT device on the display.

2. The wearable electronic device of claim 1, wherein the at least one processor is further configured to:
refer to a mapping table that maps providable functions corresponding to sensor data and state information of at least one IoT device, and
identify the candidate function providable by the at least one IoT device based on the mapping table.

3. The wearable electronic device of claim 1, wherein the at least one processor is further configured to obtain state information related to the plurality of IoT devices registered in a preferred device group in the electronic device when communicatively connecting with the electronic device through the communication module.

4. The wearable electronic device of claim 3, wherein the state information comprises at least one of a placement location of each of the plurality of IoT devices, identification information for the plurality of IoT devices, or scene information in which information instructing at least some of the plurality of IoT devices to perform a designated function corresponding to sensor data is grouped.

5. The wearable electronic device of claim 1, wherein the at least one processor is further configured to identify a state of the wearable electronic device with respect to at least one of a wearing state of the wearable electronic device, a user state wearing the wearable electronic device, or a surrounding environment of the user, based on sensor data obtained by using the at least one sensor.

6. The wearable electronic device of claim 5, wherein the at least one processor is further configured to identify a candidate function providable by the at least one IoT device among the plurality of IoT devices based on a state of the wearable electronic device and a usage history of the plurality of IoT devices.

7. The wearable electronic device of claim 1, wherein the at least one processor is further configured to:
receive a user input selecting a candidate function providable by the at least one IoT device displayed on the display, and
transmit a command for controlling an operation of the at least one IoT device to the electronic device through the communication module in response to the user input.

8. The wearable electronic device of claim 7, wherein the at least one processor is further configured to transmit a command for controlling an operation of the at least one IoT device through the communication module based on a metadata format commonly defined between the electronic device and the wearable electronic device.

9. The wearable electronic device of claim 7, wherein the at least one processor is further configured to execute an IoT-based application for controlling the plurality of IoT devices connected to the electronic device in response to the user input.

10. A method for controlling a plurality of Internet of things (IoT) devices in a wearable electronic device, the method comprising:
obtaining state information related to a plurality of IoT devices from an electronic device connected to the plurality of IoT devices through wireless communication;
obtaining sensor data by using at least one sensor;
identifying a candidate function providable by at least one IoT device among the plurality of IoT devices based on the sensor data and the state information related to the plurality of IoT devices; and
displaying information on the candidate function providable by the at least one IoT device.

11. The method of claim 10, wherein the identifying of the candidate function providable by the at least one IoT device comprises:
referring to a mapping table that maps providable functions corresponding to sensor data and state information of at least one IoT device; and
identifying the candidate function providable by the at least one IoT device based on the mapping table.

12. The method of claim 10, wherein the obtaining of state information related to the plurality of IoT devices comprises obtaining state information related to the plurality of IoT devices registered in a preferred device group in the electronic device when communicatively connecting with the electronic device.

13. The method of claim 12, wherein the state information comprises at least one of a placement location of each of the plurality of IoT devices, identification information for the plurality of IoT devices, or scene information in which information instructing at least some of the plurality of IoT devices to perform a designated function corresponding to sensor data is grouped.

14. The method of claim 10, wherein the information on the providable candidate function includes at least one of a name of a function, a description of a function, or a name of an IoT device performing a function.

15. At least one non-volatile storage medium storing instructions,
wherein the instructions are configured to cause a wearable electronic device to perform at least one operation, when executed by at least one processor of the wearable electronic device, and
wherein the at least one operation comprises:
obtaining state information related to a plurality of Internet of things (IoT) devices from an electronic device connected to the plurality of IoT devices through wireless communication,
obtaining sensor data by using at least one sensor,
identifying a candidate function providable by at least one IoT device among the plurality of IoT devices based on the sensor data and the state information related to the plurality of IoT devices, and
displaying information on the candidate function providable by the at least one IoT device.
